(19) Europäisches Patentamt
European Patent Office
Office européen des brevets

(11) **EP 0 839 761 B1**

(12) **EUROPÄISCHE PATENTSCHRIFT**

(45) Veröffentlichungstag und Bekanntmachung des Hinweises auf die Patenterteilung:
**14.07.1999 Patentblatt 1999/28**

(51) Int. Cl.$^6$: **C01B 39/02**

(21) Anmeldenummer: **97118010.4**

(22) Anmeldetag: **17.10.1997**

(54) **Verfahren zur Verbesserung der Abrasionsbeständigkeit von Zeolith-Formkörpern**

Process for improving the abrasion resistance of zeolite shaped bodies

Procédé pour améliorer la résistance à l'abrasion de corps moules de zeolites

(84) Benannte Vertragsstaaten:
**AT BE CH DE DK ES FI FR GB GR IE IT LI NL PT SE**

(30) Priorität: **31.10.1996 DE 19643957**

(43) Veröffentlichungstag der Anmeldung:
**06.05.1998 Patentblatt 1998/19**

(73) Patentinhaber:
**Degussa-Hüls Aktiengesellschaft**
**45764 Marl (DE)**

(72) Erfinder:
• **Heindl, Frank**
**63517 Rodenbach (DE)**

• **Eckehart, Roland, Dr.**
**Hartsdale, 10530 NY (US)**
• **Kossel, Elke**
**63694 Limeshain 2 (DE)**
• **Feuer, Oliver**
**63477 Maintal-Dörningheim (DE)**

(56) Entgegenhaltungen:
**DE-A- 2 233 070**          **DE-A- 3 401 485**

• **PATENT ABSTRACTS OF JAPAN vol. 011, no. 132 (C-417), 24.April 1987 & JP 61 266306 A (AGENCY OF IND SCIENCE & TECHNOL), 26.November 1986,**

## Beschreibung

Zeolithe werden in den Anwendungsfeldern Adsorption und Katalyse überwiegend als Formkörper, wie z.B. Extrudate oder Granulate, deren mittlerer Durchmesser von ca. 30 $\mu$m bis ca. 10 mm reichen kann, eingesetzt.

Von großer Wichtigkeit sind neben der eigentlichen Funktion der Zeolithgranulate deren mechanische Eigenschaften, wie z.B. die Bruch- und die Abriebfestigkeit. Von besonderer Bedeutung ist die Beständigkeit von Formkörpern bei Verfahren, in denen die Zeolithschüttbetten von Gasen oder Flüssigkeiten durchströmt werden. Auch bei Zeolithgranulaten, die in der sogenannten statischen Adsorption verwendet werden, ist eine hohe Abriebfestigkeit erforderlich, da andernfalls das Handling zur Staubentwicklung führt. Bei solchen Granulaten handelt es sich beispielsweise um die Zeolithe, die zur Trocknung der Luft im Scheibenzwischenraum von Isolierglas eingesetzt werden.

Es ist bekannt, Zeolith-Formkörper je nach gewünschter Korngröße und Form mittels Sprüh-, Wirbelschicht- und Tellergranulation sowie Extrusion, wobei oft keramische Bindemittel eingesetzt werden, herzustellen. Zur Verfestigung der Granulate oder Extrudate werden zusätzlich, falls notwendig, Trocknungs- und Calcinierungsschritte angefügt.

In einigen Fällen ist die Abrasionsbeständigkeit der Zeolithgranulate, so wie sie im Granulationsprozess direkt anfallen, für die Anforderungen der jeweiligen Anwendung nicht ausreichend.

Es bestand somit die Aufgabe, die Abrasionsbeständigkeit von Zeolith-Formkörpern zu verbessern.

Gegenstand der Erfindung ist ein Verfahren zur Verbesserung der Abrasionsbeständigkeit von Zeolith-Formkörpern, welches dadurch gekennzeichnet ist, daß man die Zeolith-Formkörper mit einer wäßrigen Lösung von Kieselsol besprüht.

Diese Maßnahme kann an unterschiedlichen Punkten des Granulationsprozesses angewandt werden: So ist zum Beispiel das Aufsprühen des Kieselsols auf fertige, calcinierte Zeolith-Formkörper möglich. Alternativ kann das Besprühen auch auf nicht calcinierte Zeolith-Formkörper, sogenannte Grünlinge, die noch keine Temperaturbehandlung erfahren haben, erfolgen. Das Besprühen kann auch auf nicht calcinierte Zeolith-Formkörper während der Trocknung in der Wirbelschicht erfolgen.

In einer besonderen Ausführungsform werden die Zeolith-Formkörper auf einem rotierenden Teller vorgelegt und mit Kieselsol-Lösung besprüht. Ein derartiges Vorgehen kann kontinuierlich oder diskontinuierlich gestaltet werden.

Das Kieselsol kann in solchen Mengen eingesetzt werden, daß der Massenanteil des aus ihm resultierenden Siliciumdioxids, bezogen auf die Trockenmasse der eingesetzten Zeolith-Formkörper, zwischen 0,1 und 20 Prozent beträgt. Im Einzelfall kann das Kieselsol in einer Menge, die einerseits ausreicht, um die Abriebfestigkeit der Zeolith-Formkörper zu verbessern, andererseits aber die Funktion der Zeolith-Formkörper nicht beeinträchtigt, eingesetzt werden.

Der Siliciumdioxid-Gehalt des Kieselsols kann zwischen 1 und 40 Prozent liegen. Das Kieselsol kann mit Ammonium- oder mit Alkalimetallionen stabilisiert sein. Geeignete Kieselsole sind beispielsweise die Produkte LUDOX AS 40 und HS 40 der Firma DuPont und hieraus durch Verdünnung mit Wasser hergestellte Lösungen.

Nach dem Besprühen der Zeolith-Formkörper mit Kieselsol kann man eine Trocknung und eine Calcinierung anschließen, wobei die Trocknungstemperatur zwischen 20 °C und 200 °C und die Calcinierungstemperatur zwischen 200 °C und 1.000 °C betragen kann.

Das erfindungsgemäße Verfahren hat den Vorteil, daß die Abrasionsbeständigkeit der Zeolith-Formkörper deutlich verbessert werden kann.

## Beispiele

Die eingesetzten Zeolith-Formkörper weisen einen Durchmesser zwischen 0,5 und 0,9 mm auf. Sie werden gemäß DE 31 32 379 hergestellt.

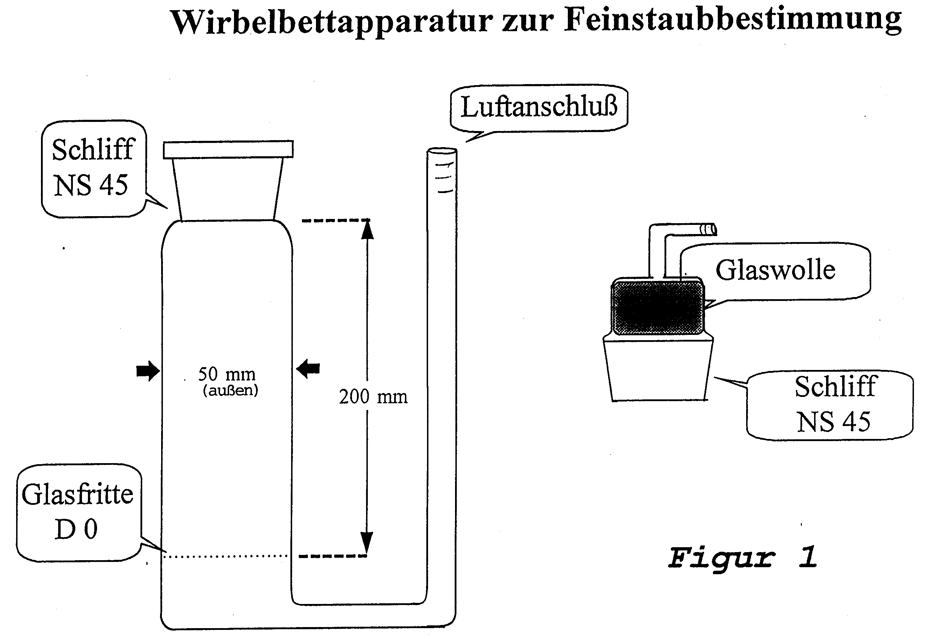

Zur Überprüfung der Abrasionsbeständigkeit wird der folgende Test (vgl. Figur 1) angewendet:

Etwa 100 g (Trockenmasse, ermittelt nach Calcinieren bei 450 °C) werden auf einer Präzisionswaage (Toleranz +/- 0,1 g) abgewogen und in die Apparatur auf den Frittenboden gefüllt. Es wird ein dicht mit Glaswolle gefüllter Schliffkern, der als Filter für Feinstaub dient, aufgesetzt. Die Masse des mit Glaswolle gefüllten Schliffkerns wird mit einer Analysenwaage (Toleranz: +/- 0,002 g) bestimmt. Während einer Dauer von 3 h wird ein Luftstrom von 1500 l/h durch die Apparatur geleitet. Danach wird der Schliffkern vorsichtig entfernt und wiederum mit der Analysenwaage gewogen. Hieraus ergibt sich der prozentuale Feinstaubanteil als Maß für die Abriebfestigkeit nach

Prozent Staubanteil = (Feinstaub x 100) / Einwaage.

Beispiel 1

146,8 g getrocknete Zeolith-Formkörper (Grünlinge) (Trockenmasse nach Calcinierung bei 1000 °C: 114,0 g) werden auf einem Labor-Granulierteller vorgelegt. Während der Rotation des Tellers werden 1,28 g Ludox AS 40, verdünnt mit 1,28 g Wasser, innerhalb von 120 sec. auf die Zeolith-Formkörper gesprüht. Hierzu wird eine Zweistoffdüse (Durchmesser innen: 0,5 mm, Vordruck: 0,25 bar) benutzt. Die im Kieselsol enthaltene Menge an Siliciumdioxid, bezogen auf die Trockenmasse der eingesetzten Zeolith-Formkörper beträgt 0,45 Prozent. Die besprühten Zeolith-Formkörper werden im Trockenschrank 1 h bei 50 °C getrocknet und anschließend im Muffelofen bei 480 °C calciniert (Aufheizen von Raumtemperatur: 2 h, Haltezeit: 1 h). Derselben Trocknungs- und Cacinierungsprozedur werden zum Vergleich nicht besprühte Zeolith-Formkörper unterzogen. Anschließend wird an beiden Proben die Abrasionsbeständigkeit ermittelt. Die mit Kieselsol besprühten Zeolith-Formkörper führen zu 0,0367 Prozent Feinstaub, während die nicht besprühten Zeolith-Formkörper 0,0679 Prozent ergeben.

Die erfindungsgemäß besprühten Zeolith-Formkörper weisen demnach eine verbesserte Abrasionsbeständigkeit auf.

Beispiel 2

200,0 g calcinierte Zeolith-Formkörper (Trockenmasse nach Calcinierung bei 1000 °C: 197,0 g) werden auf einem Labor-Granulierteller vorgelegt. Während der Rotation des Tellers werden 2,5 g Ludox AS 40, verdünnt mit 7,5 g Wasser, innerhalb von 120 sec. auf die Zeolith-Formkörper gesprüht. Hierzu wird eine Zweistoffdüse (Durchmesser innen: 0,5 mm, Vordruck: 0,25 bar) benutzt. Die im Kieselsol enthaltene Menge an Siliciumdioxid, bezogen auf die Trockenmasse der eingesetzten Zeolith-Formkörper beträgt 0,51 Prozent. Die besprühten Zeolith-Formkörper werden parallel mit nicht besprühten Formkörpern im Trockenschrank 1 h bei 50 °C getrocknet und anschließend im Muffelofen bei 480 °C calciniert (Aufheizen von Raumtemperatur: 2 h, Haltezeit: 1 h). Anschließend wird an beiden Proben die Abrasionsbeständigkeit ermittelt. Die mit Kieselsol besprühten Zeolith-Formkörper führen zu 0,0069 Prozent Feinstaub, während die nicht besprühten Zeolith-Formkörper 0,0330 Prozent ergeben.

Die erfindungsgemäß besprühten Zeolith-Formkörper weisen demnach eine verbesserte Abrasionsbeständigkeit auf.

Beispiel 3

Der Versuch gemäß Beispiel 2 wird mit 400,0 g calcinierten Zeolith-Formkörpern aus einer anderen Charge wiederholt, wobei 2,5 g Ludox AS 40, verdünnt mit 17,5 g Wasser, innerhalb von 150 sec. aufgesprüht werden. Die im Kieselsol enthaltene Menge an Siliciumdioxid, bezogen auf die Trockenmasse der eingesetzten Zeolith-Formkörper, beträgt somit 0,25 Prozent. Die mit Kieselsol besprühten Zeolith-Formkörper führen zu 0,0164 Prozent Feinstaub, die nicht besprühten Zeolith-Formkörper zu 0,0428 Prozent.

Beispiel 4

Der Versuch gemäß Beispiel 3 wird wiederholt, wobei 8,0 g Ludox AS 40, verdünnt mit 12,0 g Wasser, innerhalb von 240 sec. aufgesprüht werden. Die im Kieselsol enthaltende Menge an Siliciumdioxid, bezogen auf die Trockenmasse der eingesetzten Zeolith-Formkörper, beträgt somit 0,81 Prozent. Die mit Kieselsol besprühten Zeolith-Formkörper führen zu 0,0137 Prozent Feinstaub, die nicht mit Kieselsol besprühten Zeolith-Formkörper zu 0,0428 Prozent.

**Patentansprüche**

1. Verfahren zur Verbesserung der Abrasionsbeständigkeit von Zeolith-Formkörpern, dadurch gekennzeichnet, daß man die Zeolith-Formkörper mit einer wässrigen Lösung von Kieselsol besprüht.

2. Verfahren nach Anspruch 1, dadurch gekennzeichnet, daß man fertige, calcinierte Zeoilth-Formkörper besprüht.

3. Verfahren nach Anspruch 1, dadurch gekennzeichnet, daß man nicht calcinierte Zeolith-Formkörper besprüht.

4. Verfahren nach Anspruch 1, dadurch gekennzeichnet, daß der Massenanteil des aus dem Kieselsol resultierenden Siliciumdioxids, bezogen auf die Trockenmasse der eingesetzten Zeolith-Formkörper, zwischen 0,1 und 20 Prozent beträgt.

5. Verfahren nach Anspruch 1, dadurch gekennzeichnet, daß das eingesetzte Kieselsol bis 40 Prozent Siliciumdioxid enthält.

6. Verfahren nach Anspruch 1, dadurch gekennzeichnet, daß man ein Kieselsol, welches mit Alkalimetallionen oder Ammoniumionen stabilisiert ist, einsetzt.

7. Verfahren nach Anspruch 1, dadurch gekennzeichnet, daß man die Zeolith-Formkörper nach Besprühen mit Kieselsol bei Temperaturen zwischen 20 °C und 200 °C trocknet und zwischen 200 °C und 1.000 °C calciniert.

## Claims

1. Process for improving the abrasion resistance of zeolite shaped bodies, characterised in that the zeolite shaped bodies are sprayed with an aqueous solution of silica sol.

2. Process according to claim 1, characterised in that finished, calcined zeolite shaped bodies are sprayed.

3. Process according to claim 1, characterised in that zeolite shaped bodies which have not been calcined are sprayed.

4. Process according to claim 1, characterised in that the proportion by weight of silicon dioxide resulting from the silica so], based on the dry weight of the zeolite shaped bodies used, is from 0.1 to 20 %.

5. Process according to claim 1, characterised in that the silica sol used contains up to 40 % silicon dioxide.

6. Process according to claim 1, characterised in that a silica sol stabilised with alkali metal ions or ammonium ions is used.

7. Process according to claim 1, characterised in that the zeolite shaped bodies, after being sprayed with silica sol, are dried at temperatures of from 20°C to 200°C and calcined at from 200°C to 1000°C.

## Revendications

1. Procédé pour améliorer la résistance à l'abrasion de corps moulés zéolitiques, caractérisé en ce qu'on asperge les corps moulés zéolitiques d'une solution aqueuse de sol de silice.

2. Procédé selon la revendication 1, caractérisé en ce qu'on asperge des corps moulés zéolitiques calcinés finis.

3. Procédé selon la revendication 1, caractérisé en ce qu'on asperge des corps moulés zéolitiques non calcinés.

4. Procédé selon la revendication 1, caractérisé en ce que la fraction massique du dioxyde de silicium résultant du sol de silice par rapport à la masse sèche des corps moulés zéolitiques utilisés se situe entre 0,1 et 20%.

5. Procédé selon la revendication 1, caractérisé en ce que le sol de silice utilisé contient jusqu'à 40% de dioxyde de silicium.

6. Procédé selon la revendication 1, caractérisé en ce qu'on utilise un sol de silice qui est stabilisé par des ions de métaux alcalins ou des ions d'ammonium.

7. Procédé selon la revendication 1, caractérisé en ce qu'on sèche les corps moulés zéolitiques, après aspersion de sol de silice, à des températures entre 20 et 200°C et en ce qu'on les calcine ensuite entre 200 et 1000°C.

# Wirbelbettapparatur zur Feinstaubbestimmung

Schliff NS 45

Luftanschluß

50 mm (außen)

200 mm

Glasfritte D 0

Glaswolle

Schliff NS 45

*Figur 1*

EP 0 839 761 B1